# EUROPEAN PATENT APPLICATION

(11) **EP 2 003 427 A1**
(43) Date of publication of application: **17.12.2008**
(21) Application number: 08157306.5
(22) Date of filing: 30.05.2008
(51) Int. Cl.: G01F 11/26

(54) **Decanter for displaying and pouring bottled liquids**

(30) Priority: 15.06.2007 ES 200701285 U
(71) Applicant: EL HOGAR PERFECTO DEL SIGLO XXI, S.L., 28232 Las Rozas, Madrid (ES)
(72) Inventor: Presa Agüero, Fernando, 28232 Las Rozas, Madrid (ES)
(74) Representative: Pons Arino, Angel

(57) **Abstract**

The present invention relates to a decanter for displaying and pouring bottled liquids, preferably and fundamentally for wines and even for oils, being designed to take the form of what can be considered a mini-decanter that is fitted onto the neck of the bottle once its stopper has been removed, making it possible to decant each serving of liquid that is to be served to the consumer.

## Description

### OBJECT OF THE INVENTION

The present invention relates to a decanter for displaying and pouring bottled liquids, preferably and fundamentally for wines and even for oils, being designed to take the form of what can be considered a mini-decanter that is fitted onto the neck of the bottle once its stopper has been removed, making it possible to decant each serving of liquid that is to be served to the consumer.

The object of the invention is to make it possible to appreciate with absolute clarity the colour, texture, limpidity, smell and other properties of each serving of wine that is to be poured, once the bottle has been opened and before serving it in the corresponding glass.

### BACKGROUND OF THE INVENTION

As is known, for wines of a certain quality the content of the bottle must be controlled, first in terms of its appearance and then its smell, which is difficult to achieve with the dark glass bottles that are usual for red wines. In order appreciate the organoleptic properties and limpidity of the liquid (colour, smell and flavour), this has so far been achieved by transferring the wine into another bottle, called a decanter, which is a transparent receptacle with a very wide shape at its base that determines a large contact surface of the wine with the glass, thus making it easier to appreciate and helping any residue to settle.

However, there is no known decanter that makes it possible to carry out a complete control of the liquid from the bottle itself before it is served and to appreciate the smell, texture, shine, colour and clearness of the wine or liquid corresponding to the serving that is to be poured for each consumer.

### DESCRIPTION OF THE INVENTION

The decanter proposed herein is designed precisely to meet the requirements explained in the last paragraph of the previous section, as it can be considered a mini-decanter that not only makes it possible to display and observe the wine or liquid that is to be consumed by each person, but it also makes it possible to appreciate its qualities or defects, etc., as well as allowing it to be subsequently poured from the bottle itself into the corresponding glass for its final consumption without having to decant it.

The decanter takes the form of a small receptacle with a mouth and a wide inner lower depression that defines a concentric wall that surrounds the neck of the bottle, with an opening in the base that defines a neck that is tucked inwards, the mouth of the bottle being positioned in said neck, the inner end of which is logically open, once the bottle has been opened and the corresponding stopper thereof removed, so that by tilting the bottle with the decanter fitted onto its mouth or neck, said decanter is filled without the liquid spilling out, it remaining in said decanter until it is served in the final glass for consumption, which means that the consumer may appreciate the colour and texture of the wine contained in said decanter after it leaves the bottle, on top of the bottle yet before it is consumed, as was mentioned above.

In a preferred embodiment, the mouth of the decanter is in an oblique lateral situation to prevent the wine from spilling out of the bottle when it is tilted and the decanter can be filled without the risk of the wine spilling out. Thus, it is also possible to empty the decanter without the risk of liquid coming out of the bottle at the same time.

In another embodiment, the decanter can have a mouth situated axially, i.e. at the top, as is conventional in this type of receptacle.

In short, every time a glass is served to a consumer, the serving will correspond to the wine contained in the decanter after emptying that corresponding serving from the bottle by the tilting thereof, which means that this serving will be from the decanter and not directly from the bottle, whilst the wine from the bottle refills the decanter with another serving that will then be served to another consumer.

Therefore, the decanter of the invention ensures an absolute control of the wine or liquid to be served, as the surface area thereof is much larger once the serving of wine has been emptied into the decanter, and it also serves to show the colour, impurities, should there be any, and the texture through the transparent wall thereof.

### DESCRIPTION OF THE DRAWINGS

To complement the following description and in order to aid a better understanding of the invention's characteristics, according to a preferred practical embodiment thereof, there is a set of illustrative and non-limiting drawings integral to said description, which are as follows:
Figure 1 shows a general perspective view of the decanter of the invention.
Figure 2 shows a cross-sectional elevation view of the decanter of the previous figure.
Figure 3 shows an elevation view of the decanter fitted onto the neck of a bottle once it has been opened and the original stopper removed therefrom.
Figure 4 shows a similar view to that of the previous figure, but with the bottle tilted to show how the decanter is filled without the liquid spilling out.
Figure 5 shows a view of the decanter wherein the mouth is axial instead of lateral and sloping, as shown in the previous figures, this second variant being of an embodiment of the decanter fitted onto the corresponding mouth of the bottle.

### PREFERRED EMBODIMENT OF THE INVENTION

As can be seen in the aforementioned figures, the decanter of the invention takes the form of a transparent body (1) with a small capacity, which presents a sloping mouth (2) on one of its sides, whilst its inside defines a wide cavity or hollow (3) that defines a concentric wall (4) with a neck (5) that is concentric to this wall (4), the inside of the neck (5) being open, according to reference (6).

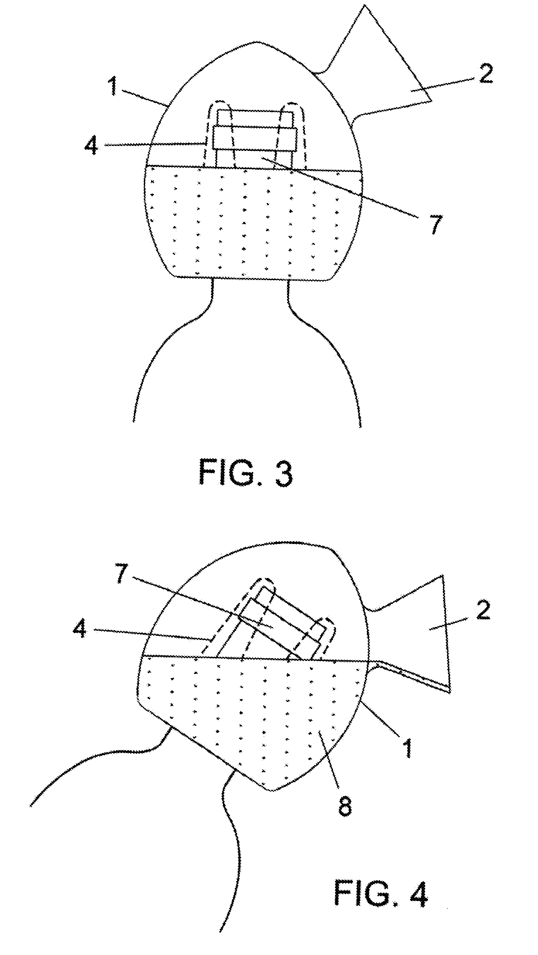

This decanter, which is designed to have an approximate capacity of a serving of wine for the consumer, is fitted onto the neck (7) of the bottle that contains the wine, once it has been opened and the stopper removed therefrom, the neck (7) of the bottle being housed in the mouth corresponding to the neck (5) of the hollow base (3) of the decanter (1), so that when tilted the liquid is poured out of it and retained in the decanter (1) itself until it is filled up, as shown in figure 4, which shows a volume of liquid (8) that has been poured out of the bottle when it was tilted and retained in the decanter (1), determining a serving of wine that can be perfectly observed in terms of both texture and colour due to the transparency of the decanter (1) itself before then being served in the glass for its final consumption, so that thanks to the lateral mouth (2) of the decanter (1), it is possible to fill it without the risk of the wine (8) spilling out and, in turn, emptying it without the risk of wine or liquid spilling out of the bottle at the same time.

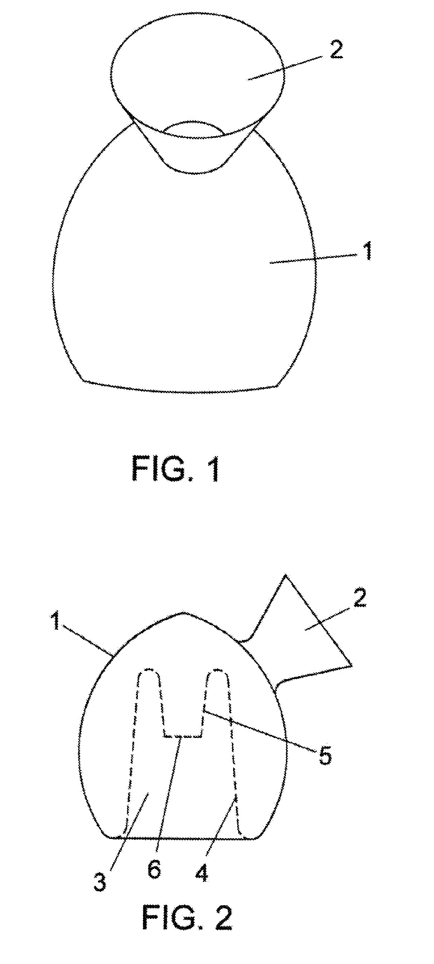

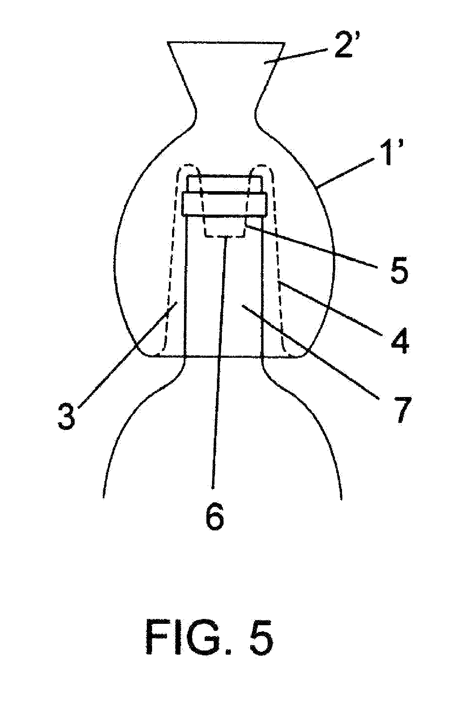

In the variant embodiment shown in figure 5, the decanter (1') presents the same characteristics as the decanter (1), only varying in that the outlet mouth of said decanter (1') is situated axially at the top thereof and on not obliquely on one side as was the case with the decanter shown in figures 1 to 4. Apart from this, both the application of the decanter (1') and its use and functions, correspond exactly to those of the above-described decanter.

## Claims

1. Decanter for displaying and pouring bottled liquids, preferably destined for application in the wine sector, not only to improve the organoleptic properties of the wine, but also to make it possible to observe the texture and colour of the wine itself, **characterised in that** it takes the form of a closed transparent body with a small capacity, the base of which presents a wide inner hollow wherein a concentric wall is established with a neck that is concentric thereto, which has a descending path that determines an opening to said body, this neck being of an appropriate shape and size for the mouth of the bottle onto which it will be fitted, said body being provided with an outlet mouth in a position established above the middle area thereof.

2. Decanter for displaying and pouring bottled liquids, according to claim 1, **characterised in that** the corresponding outlet mouth of the decanter is situated obliquely on one side.

3. Decanter for displaying and pouring bottled liquids, according to claim 1, **characterised in that** the outlet mouth of the decanter is situated axially at its top end.
